# EUROPEAN PATENT APPLICATION

(11) **EP 3 057 294 A1**
(43) Date of publication of application: **17.08.2016**
(21) Application number: 14852798.9
(22) Date of filing: 25.04.2014
(51) Int. Cl.: H04M 1/2745

(54) **METHOD AND DEVICE FOR COLLATING CARD HOLDER OF CELL PHONE**

(30) Priority: 10.10.2013 CN 201310469564
(71) Applicant: ZTE Corporation, Shenzhen City, Guangdong Province 518057 (CN)
(72) Inventor: XIANG, Gonghong, Shenzhen Guangdong 518057 (CN); DONG, Shufang, Shenzhen Guangdong 518057 (CN); CHEN, Cong, Shenzhen Guangdong 518057 (CN); FANG, Fangming, Shenzhen Guangdong 518057 (CN)
(74) Representative: Novagraaf Technologies
(86) International application number: PCT/CN2014/076265
(87) International publication number: WO 2015/051632

(57) **Abstract**

Provided are a method and device for collating a card holder of a cell phone, and relates to the technical field of mobile terminals. The method includes: a multi-point touch operation of a user on a card menu is detected, to judge whether multiple contacts with a duplicate name in the card menu are touched simultaneously under the multi-point touch operation; when the multiple contacts with the duplicate name in the card menu are touched simultaneously under the multi-point touch operation, contact information of the multiple touched contacts with the duplicate name is displayed on the one editable page. The present disclosure discloses a method for processing gestures inputs via providing a card holder of contacts with the duplicate name, thus improving the handling efficiency of a user and enhancing the user experience.

## Description

### Technical Field

The present disclosure relates to the technical field of mobile terminals, and in particular to a method and device for collating a cell phone card holder.

### Background

In the use process of a cell phone, a card holder will be saved on each of the cell phone and a cell phone card. As the phone number of every contact will be possibly changed, after the number of the contact is changed, the cell phone number stored on the cell phone and the cell phone number stored on the cell phone card are different. Furthermore, it is more and more popular to use a dual-SIM-card cell phone, so it becomes popular that there are contacts from two SIM cards in the card holder of a user. Due to different use situations of the two SIM cards before, the phone number of some contacts with the duplicate name may be consistent or different.

At present, these contacts with the duplicate name are not considered to be the same person in the cell phone, and all of the contacts will be listed due to different stored positions (of course, the contacts one the cell phone or a certain SIM card are merely listed by setting, but in such way, some contacts will be omitted, and here only a situation where LIST ALL set by the user will be considered).

Thus, when intending to collate phone number, the phone number is merely clicked to open and edit one by one by the user, and to check which number is needed to be retained. When two phone numbers are found to be the same after being opened, the operation of the user is in vain.

### Summary

The embodiment of the present disclosure provides a method and a device for collating a card holder of a cell phone, to at least solve the problem that the card holder cannot be collated in a fast way under the condition that the contact number with the duplicate name is different in a related art.

According to one aspect of an embodiment of the present disclosure, a method for collating a card holder of a cell phone is provided, comprising: detecting a multi-point touch operation of a user on a card menu, to judge whether multiple contacts with a duplicate name in the card menu are touched simultaneously under the multi-point touch operation; when the multiple contacts with the duplicate name in the card menu are touched simultaneously under the multi-point touch operation, displaying contact information of the multiple touched contacts with the duplicate name on one same editable page.

In an example embodiment of the present disclosure, there is at least one other contact with the duplicate name for each contact in the card menu, and the contacts with the duplicate name in the card menu have different contact information.

In an example embodiment of the present disclosure, the contact information comprises cell phone number information of a contact, wherein forming of the card menu comprises: listing all contacts on a cell phone and on a cell phone card; judging whether, among all the contacts, there are contacts with a duplicate name; when a judging result is that among all the contacts, there are contacts with a duplicate name, judging through a comparison of whether the contacts with the duplicate name have the same cell phone number information, to determine whether to delete or retain the contacts with the duplicate name; forming the card menu by deletion or retention of the contacts with the duplicate name.

In an example embodiment of the present disclosure, judging whether to delete or retain the contacts with the duplicate name comprises: when the contacts with the duplicate name have the same cell phone number information, deleting at least one of the contacts with the duplicate name; when the contacts with the duplicate name have different cell phone number information, retaining the contacts with the duplicate name.

In an example embodiment of the present disclosure, each piece of the contact information of the multiple contacts with the duplicate name displayed on the edible page is edible.

In an example embodiment of the present disclosure, judging whether the multiple contacts with the duplicate name in the card menu are touched simultaneously under the multi-point touch operation comprises: judging whether the multi-point touch operation is performed simultaneously on the card menu; when a judging result is that the multi-point touch operation is performed simultaneously on the card menu, further judging whether the multi-point touch operation is used to touch simultaneously multiple contacts with the duplicate name in the card menu.

According to another aspect of the present disclosure, a device for collating a card holder of a cell phone is provided, comprising: a touch component, configured to detect a multi-point touch operation of a user on a card menu, to judge whether multiple contacts with a duplicate name in the card menu are touched simultaneously under the multi-point touch operation; a collating component, configured to, when the multiple contacts with the duplicate name in the card menu are touched simultaneously under the multi-point touch operation, display contact information of the multiple touched contacts with the duplicate name on one same editable page.

In an example embodiment of the present disclosure, there is at least one other contact with the duplicate name for each contact in the card menu in the touch component, and the contacts with the duplicate name in the card menu have different contact information.

In an example embodiment of the present disclosure, the touch component comprises: a listing element, configured to list all contacts on a cell phone and on a cell phone card; a judging element, configured to judge whether, among all the contacts, there are contacts with a duplicate name; a comparing element, configured to, when a judging result is that among all the contacts, there are contacts with a duplicate name, judge through a comparison of whether the contacts with the duplicate name have the same cell phone number information, to determine whether to delete or retain the contacts with the duplicate name; a forming element, configured to form the card menu by deletion or retention of the contacts with the duplicate name; wherein, the contact information comprises cell phone number information of a contact.

In an example embodiment of the present disclosure, the touch component further comprises: a simultaneous touch judging element, configured to judge whether the multi-point touch operation is performed simultaneously on the card menu; a multiple-contact-touch judging element, configured to, when a judging result is that the multi-point touch operation is performed simultaneously on the card menu, further judge whether the multi-point touch operation is used to touch simultaneously multiple contacts with the duplicate name in the card menu.

Compared with the related art, the embodiment of the present disclosure can bring the beneficial effects that:
the embodiment of the present disclosure discloses a method for processing gestures inputs via providing a list of contacts with a duplicate name, thus improving the handling efficiency of a user and enhancing the user experience.

### Brief Description of the Drawings

Fig. 1 shows a flowchart I of a method for collating a card holder of a cell phone according to an embodiment of the present disclosure;
Fig. 2 shows a diagram of a device for collating a card holder of a cell phone according to an embodiment of the present disclosure;
Fig. 3 shows a flowchart II of the method for collating the card holder of the cell phone according to an embodiment of the present disclosure;
Fig. 4 shows a diagram of the card holder of the cell phone according to an embodiment of the present disclosure.
Fig. 5 shows a diagram of a cell phone contact menu according to an embodiment of the present disclosure;
Fig. 6 shows a diagram of a collating editing interface of a contact menu of the cell phone according to an embodiment of the present disclosure.

### Detailed Description of the Embodiments

The example embodiments of the present disclosure are described in detail below with accompany drawings. It should be noted that the described example embodiments below are only intended to describe and explain the present disclosure, but not intended to limit the present disclosure.

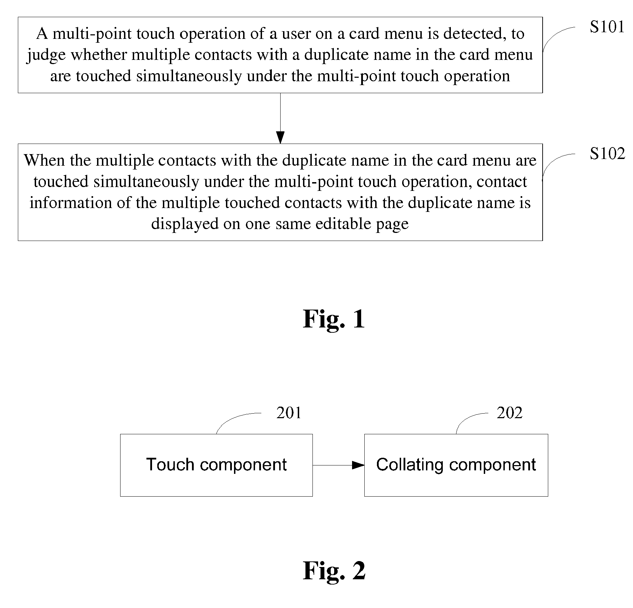

Fig. 1 shows a flowchart I of a method for collating a card holder of a cell phone according to an embodiment of the present disclosure. As shown in Fig. 1, the method includes the following steps that:
Step S101: a multi-point touch operation of a user on a card menu is detected, to judge whether multiple contacts with a duplicate name in the card menu are touched simultaneously under the multi-point touch operation;
Step S102: when the multiple contacts with the duplicate name in the card menu are touched simultaneously under the multi-point touch operation, contact information of the multiple touched contacts with the duplicate name is displayed on one same editable page.

Wherein there is at least one other contact with the duplicate name for each contact in the card menu, and the contacts with the duplicate name in the card menu have different contact information.

According to an example implementation mode of the embodiment of the present disclosure, the contact information includes cell phone number information of a contact, wherein the step that the card menu is formed includes: all contacts on a cell phone and on a cell phone card are listed; whether, among all the contacts, there are contacts with a duplicate name is judged; when a judging result is that among all the contacts, there are contacts with a duplicate name, through a comparison of whether the contacts with the duplicate name have the same cell phone number information is judged, to determine whether to delete or retain the contacts with the duplicate name; the card menu is formed by deletion or retention of the contacts with the duplicate name.

In an example embodiment, the step that whether to delete or retain the contacts with the duplicate name is judged includes: when the contacts with the duplicate name have the same cell phone number information, the contacts with the duplicate name are deleted; when the contacts with the duplicate name have different cell phone number information, the contacts with the duplicate name are retained.

Wherein each piece of the contact information of the multiple contacts with the duplicate name displayed on the edible page is edible.

According to the embodiment of the present disclosure, the step that whether of the multiple contacts with the duplicate name in the card menu are touched simultaneously under the multi-point touch operation includes: whether the multi-point touch operation is performed simultaneously on the card menu is judged; when a judging result is that the multi-point touch operation is performed simultaneously on the card menu, whether the multi-point touch operation is used to touch simultaneously multiple contacts with the duplicate name in the card menu is further judged.

Fig. 2 shows a diagram of a device for collating a card holder of a cell phone according to an embodiment of the present disclosure. As shown in Fig. 2, the device includes: a touch component 201, configured to detect a multi-point touch operation of a user on a card menu, to judge whether multiple contacts with a duplicate name in the card menu are touched simultaneously under the multi-point touch operation; a collating component 202, configured to, when the multiple contacts with the duplicate name in the card menu are touched simultaneously under the multi-point touch operation, display contact information of the multiple touched contacts with the duplicate name on one same editable page.

According to the embodiment of the present disclosure, there is at least one other contact with the duplicate name for each contact in the card menu in the touch component, and the contacts with the duplicate name in the card menu have different contact information.

To be specific, the touch component 201 includes: a listing element, configured to list all contacts on a cell phone and on a cell phone card; a judging element, configured to judge whether, among all the contacts, there are contacts with a duplicate name; a comparing element, configured to, when a judging result is that among all the contacts, there are contacts with a duplicate name, judge through a comparison of whether the contacts with the duplicate name have the same cell phone number information, to determine whether to delete or retain the contacts with the duplicate name; a forming element, configured to form the card menu by deletion or retention of the contacts with the duplicate name; wherein, the contact information includes cell phone number information of a contact.

Wherein, the touch component further includes: a simultaneous touch judging element, configured to judge whether the multi-point touch operation is performed simultaneously on the card menu; a multiple-contact-touch judging element, configured to, when a judging result is that the multi-point touch operation is performed simultaneously on the card menu, further judge whether the multi-point touch operation is used to touch simultaneously multiple contacts with the duplicate name in the card menu.

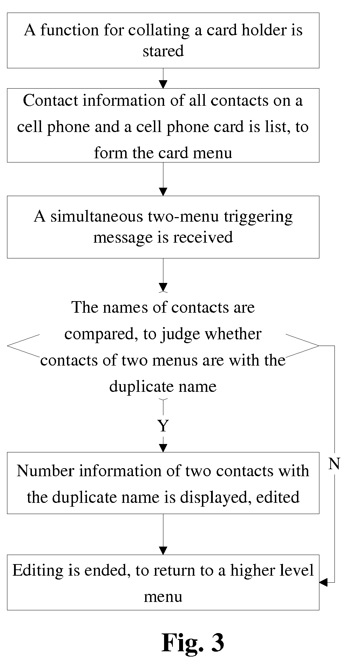

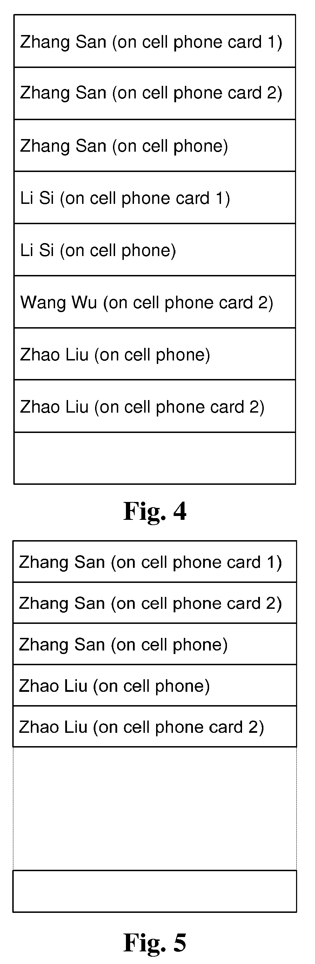

Fig. 3 shows a flowchart II of the method for collating the card holder of the cell phone according to an embodiment of the present disclosure. As shown in Fig. 3, the method includes the following steps that:
Step S301: a function of collating a card holder is started;
Step S302: contact information of all contacts on a cell phone and on a cell phone card is listed, to form the card menu;
   Via listing of the contact information of all contacts on the cell phone and the cell phone card, the card menu is formed, and sequenced as per a certain sequence, as shown in Fig. 4.
Step S303: a simultaneous multi-menu triggering message is received (transverse dragging, rotating and the like);
   a gesture input is detected to judge whether a multi-point touch is found, and whether contacts corresponds to these points belong to the multiple menu items with the duplicate name is checked;
Step S304: the contacts of cell phone are compared, to judge whether there are contacts with the duplicate name, of two menus;

When a judging result is that there are contacts with the duplicate name, of the two menus, Step S305 is performed, and when a judging result is that there are not contacts with the duplicate name, of the two menus, Step S306 is performed.

Step S305: information of two contacts with the duplicate name is displayed and edited;

When they are menu items with the duplicate name, editing interfaces are further displayed and compared according to gestures (which may be rotation, dragging and the like), to respectively list contents of the two menu items. Number may be duplicated, as shown in Fig. 5.

Step S306: editing is ended, to return to a higher level menu.

The present disclosure are described with embodiments as shown in Fig. 4 to Fig. 6 in detail.

Step 1: all contacts of the card holder on a cell phone and a cell phone card are listed and displayed, as shown in Fig. 4.

Contact information of all the contacts on the cell phone and the cell phone card is listed, to form a card holder list in which the contacts are sequenced according to a certain order.

Step 2: the contact information in the card holder list is judged, to form a card menu;

To conveniently form a list with the duplicate name and different internal number for fast processing, inquiry may be performed once on the basis of the card holder list, to merely list contacts with the duplicate name but different number, as shown in Fig. 5.

The name of each contact is compared; when there is a duplicate name on the cell phone or on the cell card, the number of the contacts are compared continuously; when the number is also the same, the two menu items are deleted, or the two menu items are retained.

For example: when the number of Zhang San on the cell phone card 1 and the number of Zhang San on the cell phone card 2 are different, the two menu items are retained;
when the number of Li Si on the cell phone card and the number of Li Si on the cell phone are the same, the two menu items are deleted;
when there is merely one number for Wang Wu, the one is deleted;
when the number of Zhao Liu on the cell phone and the number of Zhao Liu on the cell phone card 2 are different, the two menu items are retained.

Step 3: when it is determined that multiple contacts with the duplicate name in the contact menu are touched simultaneously under the multi-point touch operation, the contact information of the multiple touched contacts with the duplicate name is displayed on one same edible page for collation.

Two-point touch (such as Zhang San (on cell phone card 1) and Zhang San (on cell phone card 2)) is detected, and a gesture is further detected. Transverse dragging is taken for example.

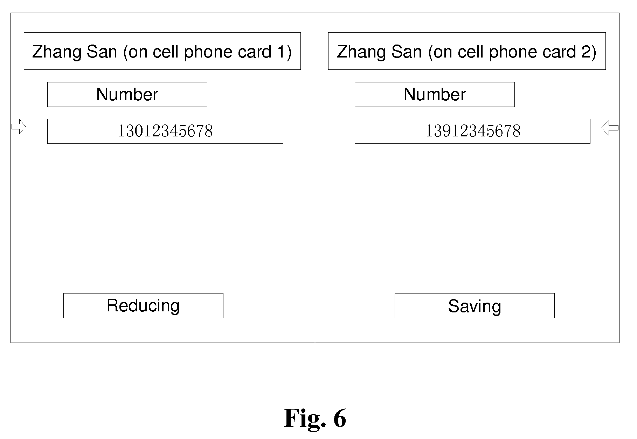

An editing and comparing interface is started, below, which is merely an implementation example, and not always the arrangement structure, as shown in Fig. 6. In this interface, number may be copied to another cell phone card in a fast way by clicking left and right arrows, or reduction and saving operation is performed by clicking the left and right arrows. Comparison between a cell phone card and a cell phone may be also performed on a similar interface, so that there may be more contact information saved on the cell phone, and the contact information may be filtered out, to make the user collate contacts.

Above all, the embodiment of the present disclosure can bring the following technical effects:
On a card holder interface, the embodiment of the present disclosure can perform multi-point operation on multiple contact menus with the duplicate name. For example, two contacts with the duplicate name are simultaneously are clicked by two fingers, which indicates that the information of the contacts with the duplicate name is required to be combined or edited. Subsequently, a difference of the two contacts can be listed, and the user can select to copy one of the two numbers for retention or continuously retain the two numbers.

Although the present disclosure has been described in detail above, it is not limited to this. A person skilled in the art can make various modifications in accordance with the principle of the present disclosure. Therefore, any modification made in accordance with the principle of the present disclosure shall fall within the scope of protection of the present disclosure.

### Industrial Applicability

The technical solution provided by the embodiment of the present disclosure can be applied to the field of mobile terminals, and improves the handling efficiency of a user and enhances the user experience by providing the method for processing gestures inputs via the lists of contacts with the duplicate name.

## Claims

1. A method for collating a card holder of a cell phone, comprising:
detecting a multi-point touch operation of a user on a card menu, to judge whether multiple contacts with a duplicate name in the card menu are touched simultaneously under the multi-point touch operation;
when the multiple contacts with the duplicate name in the card menu are touched simultaneously under the multi-point touch operation, displaying contact information of the multiple touched contacts with the duplicate name on one same editable page.

2. The method as claimed in claim 1, wherein there is at least one other contact with the duplicate name for each contact in the card menu, and the contacts with the duplicate name in the card menu have different contact information.

3. The method as claimed in claim 2, wherein the contact information comprises cell phone number information of a contact, wherein forming of the card menu comprises:
listing all contacts on a cell phone and on a cell phone card;
judging whether, among all the contacts, there are contacts with a duplicate name;
when a judging result is that among all the contacts, there are contacts with a duplicate name, judging through a comparison of whether the contacts with the duplicate name have the same cell phone number information, to determine whether to delete or retain the contacts with the duplicate name;
forming the card menu by deletion or retention of the contacts with the duplicate name.

4. The method as claimed in claim 3, wherein judging whether to delete or retain the contacts with the duplicate name comprises:
when the contacts with the duplicate name have the same cell phone number information, deleting at least one of the contacts with the duplicate name;
when the contacts with the duplicate name have different cell phone number information, retaining the contacts with the duplicate name.

5. The method as claimed in any one of claims 1 to 4, wherein each piece of the contact information of the multiple contacts with the duplicate name displayed on the edible page is edible.

6. The method as claimed in claim 1, wherein judging whether the multiple contacts with the duplicate name in the card menu are touched simultaneously under the multi-point touch operation comprises:
judging whether the multi-point touch operation is performed simultaneously on the card menu;
when a judging result is that the multi-point touch operation is performed simultaneously on the card menu, further judging whether the multi-point touch operation is used to touch simultaneously multiple contacts with the duplicate name in the card menu.

7. A device for collating a card holder of a cell phone, comprising:
a touch component, configured to detect a multi-point touch operation of a user on a card menu, to judge whether multiple contacts with a duplicate name in the card menu are touched simultaneously under the multi-point touch operation;
a collating component, configured to, when the multiple contacts with the duplicate name in the card menu are touched simultaneously under the multi-point touch operation, display contact information of the multiple touched contacts with the duplicate name on one same editable page.

8. The device as claimed in claim 7, wherein there is at least one other contact with the duplicate name for each contact in the card menu in the touch component, and the contacts with the duplicate name in the card menu have different contact information.

9. The device as claimed in claim 8, wherein the touch component comprises:
a listing element, configured to list all contacts on a cell phone and on a cell phone card;
a judging element, configured to judge whether, among all the contacts, there are contacts with a duplicate name;
a comparing element, configured to, when a judging result is that among all the contacts, there are contacts with a duplicate name, judge through a comparison of whether the contacts with the duplicate name have the same cell phone number information, to determine whether to delete or retain the contacts with the duplicate name;
a forming element, configured to form the card menu by deletion or retention of the contacts with the duplicate name;
wherein the contact information comprises cell phone number information of a contact.

10. The device as claimed in claim 7, wherein the touch component further comprises:
a simultaneous touch judging element, configured to judge whether the multi-point touch operation is performed simultaneously on the card menu;
a multiple-contact-touch judging element, configured to, when a judging result is that the multi-point touch operation is performed simultaneously on the card menu, further judge whether the multi-point touch operation is used to touch simultaneously multiple contacts with the duplicate name in the card menu.
